# EUROPEAN PATENT APPLICATION

(11) **EP 0 734 645 A2**
(43) Date of publication of application: **02.10.1996**
(21) Application number: 96610006.7
(22) Date of filing: 01.03.1996
(51) Int. Cl.: A01D 34/66

(54) **Lift-suspended agricultural implement**

(30) Priority: 01.03.1995 DK 211/95
(71) Applicant: JF-FABRIKEN - J. FREUDENDAHL A/S, DK-6400 Sonderborg (DK)
(72) Inventor: Freudendahl, Jorn, 6400 Sonderborg (DK); Nielsen, Harald Raun, 6470 Sydals (DK)
(74) Representative: Raffnsöe, Knud Rosenstand

(57) **Abstract**

The lift-suspended agricultural implement, in particular a mower such as a disc or drum mower, comprises a carrier frame (1) adapted to be connected with the three-point suspension lift (10) of a tractor, a carrier arm (2) connected with the carrier frame, said carrier arm comprising a joint (2C), the axis of which, when the implement is in its working position, extends substantially in the travelling direction of the implement, and a power means (6) for mowing the carrier frame (2) in the joint (2C), whereby the working part (3) of the implement is raised or lowered. The joint (2C) comprises a releasable stop (7, 8; 23, 24) which in its active position limits the movement of the joint (2C) in one direction without impeding the movement of the joint (2C).

## Description

The present invention relates to a lift-suspended agricultural implement, in particular a mower such as a disc or drum mower, comprising a carrier frame adapted to be connected with the three-point suspension lift of a tractor, a carrier arm connected with the carrier frame, said carrier arm comprising a joint, the axis of which, when the implement is in its working position, extends substantially in the travelling direction of the implement, and a power means for moving the carrier frame in the joint, whereby the working part of the implement is raised or lowered.

An implement of this type is for instance known from DE-A-31 34 391 which discloses a mower with a mechanical power transmission, in which the carrier arm is connected with the carrier frame through a hinge with a vertical axis, the carrier arm with the mower itself or the working part being swingable to a transport position behind the tractor. In the transport position, the joint of the carrier arm is bent in such a way that the mower is raised to a substantially vertical position. Machines of the type mentioned by way of introduction are also known, in which the carrier arm is intregral with the carrier frame.

During cutting with a lift-suspended mower, the mower is carried by the tractor although it is, however, partially resting against the ground. During turns in the field the mower is raised in order to free it from the crop already cut. As, in consideration of the power transmission, it is not desirable to raise the mower to the vertical position, it is raised by means of the lift arms of the three-point suspension. In certain cases this does, however, present some problems, because a transmission shaft, which connects the power take-off shaft of the tractor with a gear on the carrier frame, if the distance between the power take-off shaft and the gear is too short, is brought close to the maximum angles acceptable during operation. It is undesirable to raise the mower by bending the joint of the carrier frame, as this would easily entail that the driver, who is engaged in running the tractor, may happen to raise the mower so high that the maximum angles acceptable for the transmission from the gear of the carrier frame to the mower itself are exceeded, whereby the transmission becomes damaged.

During operation on a plane ground, i.e. on an underlayer which is substantailly parallel with the underlayer, on which the tractor moves during operation, the joint in the carrier arm constitutes, in a mower like the one disclosed in DE-A-31 34 391, a rigid connection, the joint being positioned in an outmost position. The power means for bending the joint may therefore be pressureless during operation. During operation on a surface which slopes downwards from and relative to the underlayer of the tractor, it is, however, a drawback, that the joint does not allow any further downwards bending. The object of the present invention is to overcome at least some of the above-mentioned drawbacks of the prior art.

The object is met by means of a mower of the type mentioned by way of introduction, said mower being characterstic in that the joint comprises a releasable stop which in its active position limits the movement of the joint in one direction without impeding the movement of the joint. Hereby is achieved that the joint keeps its movability until a certain limit, viz. the stop, but not any further, as long as the stop is in its active position.

From FR-B-1 265 333 an implement with an articulate carrier arm is known, wherein the joint may be locked in a number of fixed positions, whereby the joint is rigid, when it is locked.

In one embodiment the stop limits in its active position the movement of the joint in downwards direction and thus defines a normal, substantially horizontal working position. When mowing a downwards slanting slope the stop is released and the carrier arm may be bent downwards in the joint, whereby the mower is brought into a position corresponding to the slanting of the slope.

In a second embodiment a stop limits the movement of the joint upwardly and thereby determines a transport position for use when making turns in the field during operation. Hereby is obtained that the mower, without any danger to a possible mechanical transmission, may be raised by bending the joint of the carrier arm upwards, because the stop may be dimensioned in such a way that the carrier arm is lifted free of the field, and the transmission has not been brought into a position so extreme that there is any risk of damage.

It is known to provide the carrier frame with two couplings for the lift arms of a tractor, one coupling being movable and spring-loaded, whereby the one lift arm of the tractor, when the mower is mounted, is connected with the spring-loaded coupling, whereas the second lift arm is connected with the second coupling. It is in such machines a problem that the two couplings, when the mower is parked and demounted from the tractor, do not take up positions at the same level. To solve this problem an implement is in a further embodiment characteristic in a supporting leg with pre-determinable length for use when parking the implement demounted from the tractor, and a parking stop for limiting the movement of the joint of the carrier frame in downwards direction to a position, which relative to the working position, is downward bent in order to determine a parking position for the joint. In an embodiment the parking stop is a releasable stop.

In embodiments, in which the agricultural implement is a mower with mechanical transmission, the mower preferably comprises a gear on the carrier frame, a transmission shaft for connecting the power take-off shaft of a tractor with said gear, a second gear on the mower itself and a second transmission shaft connecting the two gears. The second gear is preferably placed such that, when the mower is in its normal working position, it is positioned substantially vertically below the axis of the joint of the carrier arm.

The invention will be described in detail in the following by means of various examples of embodiments with reference to the schematic drawing, in which
Fig. 1 shows a lift-suspended agricultural implement with a stop according to the invention during operation on a plane underlayer seen from the rear and the stop being in its active position,
Fig. 2 shows, likewise seen from the rear, the lift-suspended agricultural implement according to Fig. 1 during operation on a downwards slanting slope with the stop in its inactive position,
Fig. 3 is a sectional view of a parked mower in another embodiment,
Fig. 4 is a sectional view of the mower according to Fig. 3 during cutting of a downwards slanting slope,
Fig. 5 is a sectional view of the mower according to Fig. 3 in a common working position, and
Fig. 6 is a sectional view of the mower according to Fig. 3 in raised position for use when making a turn in the field.

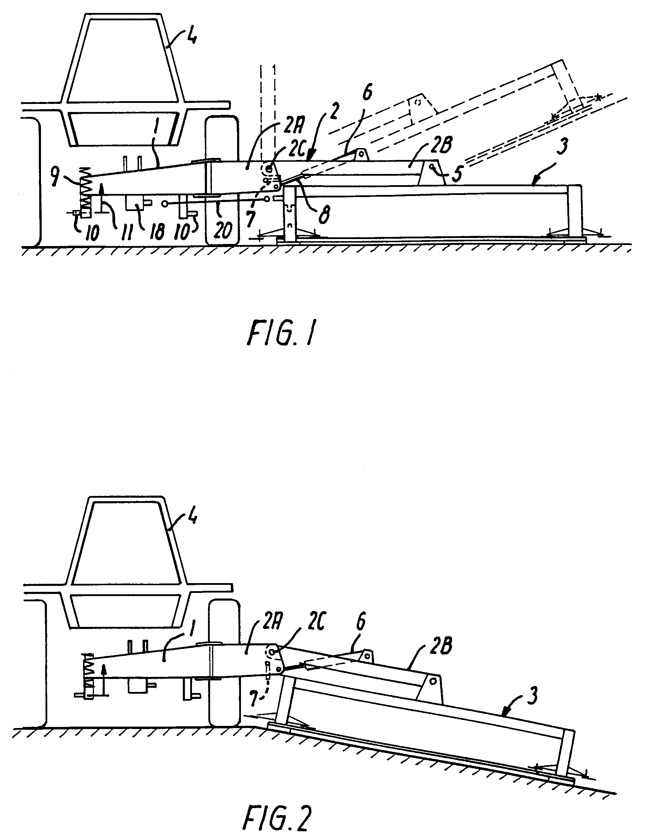

Figs. 1 and 2 show an agricultural implement 3, like for instance a mower, pivotally mounted on an extended carrier arm 2, said carrier arm 2 consisting of an outermost part 2B and an innermost part 2A mutually connected in a hinged joint 2C. The innermost part 2A of the carrier arm is pivotally connected with a carrier frame 1 mounted in the lift 10 of a tractor 4. In view of transport the agricultural implement 3 is moved towards a substantially vertical transport position (indicated by dotted lines in Fig. 1) by means of a hydraulic pressure cylinder 6, one end of which is mounted on the outermost part 2B of the carrier arm 2, and the other end of which is mounted on the innermost part 2A of the carrier arm. In the embodiment shown, the agricultural implement 3 is pivotally suspended near its centre plane about an axis 5.

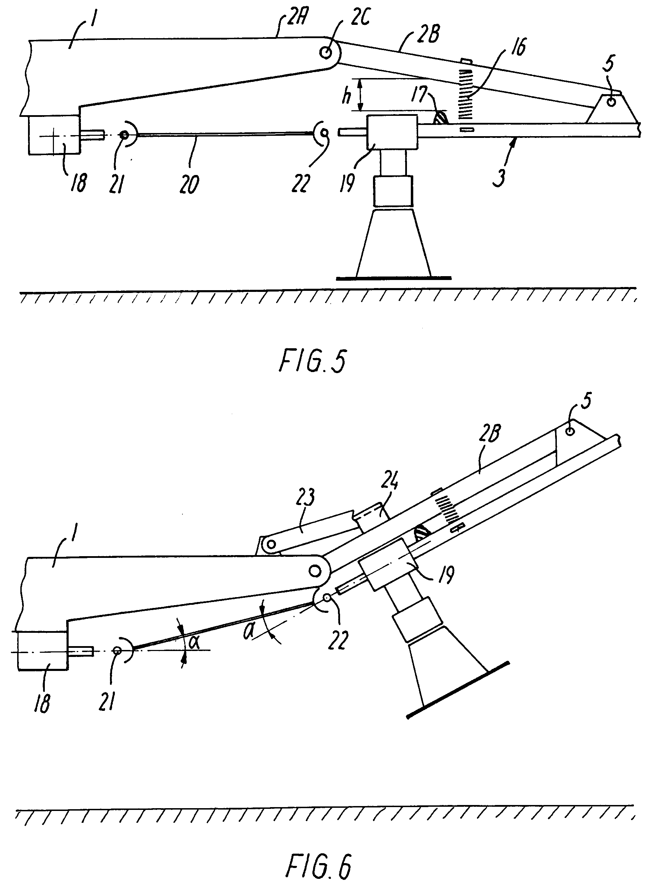

The carrier frame 1 carries, like shown in particular in Fig. 5, an angular gear 18 which is connected on one hand with the power take-off shaft of the tractor 4 and on the other hand with an input gear 19 on the mower 3 by means of a telescopic transmission shaft 20 with cardan joints 21 and 22.

During operation on a plane underlayer as shown in Fig. 1, a pivotal latch 7 on the innermost part 2A of the carrier arm is placed in its active positiion, in which it extends towards an abutment 8 on the outermost part 2B of the carrier arm such that the hinged joint 2C acts like a rigid connection during operation of the agricultural implement 3, the abutment 8 in the operating position shown in Fig. 1 abutting the end of the latch 7 and preventing further movement of the outermost part 2B of the carrier arm around the hinged joint 2C in downward direction.

By means of a relief spring 9 mounted between the lift 10 and the carrier frame 1, it is possible to obtain an approximately constant balancing of the mower 3. The carrier frame 1 is mounted in the lift 10 of the tractor 4, said lift comprising two lift arms, in such a way that it is pivotally mounted in the lift arm which is closest to the mower. The relief spring 9 acts in such a way on the other lift arm that when the mower is raised by means of the lift 10, the relief spring 9 is stretched, thus establishing a downwardly directed force between the carrier frame 1 and the lift arm, whereby the mower is acted upon upwardly by a similar force. In this way it is possible to minimize wear on the slide shoe of the mower 3, and in connection with the relief spring 9 a pointer 11 , which is visible from the tractor 4, may be provided, said pointer showing the size of the pull of the relief spring 9.

In connection with the change from common cutting operation on a plane field to cutting of a downwards slanting slope as shown in Fig. 2, the stop 7,8 is released. By means of the pressure cylinder 6 the mower 3 is raised, following which the latch 7 is swung away from its active postion in such a way that the mower 3 may be turned down around the hinged joint 2C to a position, in which it is substantially parallel with the slope. In this working position the mower is carried by the hydraulic pressure cylinder 6, and adjustment to possible inequalities may take place by the mower pendling around the axis 5.

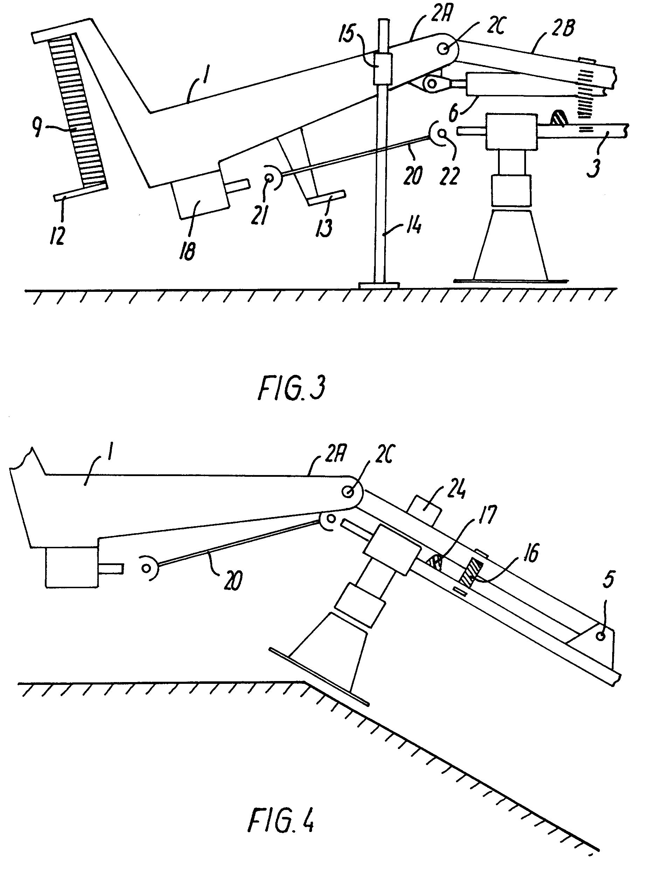

In the embodiment shown in Figs. 3-6 the innermost part 2A of the carrier frame 2 is integral with the carrier frame 1.

In Fig. 3 is shown how it is made sure that the two couplings 12, 13 of the mower are placed in the same level when the mower is parked. On account of the spring 9 one coupling 12 is raised when the mower is parked. The mower comprises a supporting leg 14, which is longitudinally displaceable and lockably inserted in a bushing 15 on the carrier frame 1. When the mower is to be parked, the supporting leg 14 is lowered to a predetermined position, the carrier arm 2 is bent downwards in the joint 2C to a stop, which may either be established by the cylinder 6, the cylinder being maximally compressed, or a further latch may be provided next to the latch 7.

When the lift arms 11 of the tractor are then lowered, the mower will get to rest on its slide shoes and the supporting leg 14, and the carrier frame 1 will take up the oblique position shown in Fig. 3, in which the couplings 12, 13 are positioned in the same level, when the spring 9 is relieved. Thereby the detaching and later attaching of the lift arms 11 is considerably facilitated.

The mower comprises in the example shown a spring 16 acting on the mower upwards relative to the near end of the tractor towards the carrrier frame 2 and a stop shoe 17. By swinging the outermost part of the carrier arm 2B downwards, and by swinging the mower around the axis 5 to the stop provided by the stop shoe 17 as shown in Fig. 4, it becomes possible to mowe a slope slanting up to 30° downwards relative to horizontal.

Fig. 5 shows the mower 3 in the same normal operation position as Fig. 1. It should be noted that the latch 7 and the pressure cylinder 6 have been omitted from several of the figures, in which they are not necessary for the understanding of the explanation. In the operating position shown the cardan joints 21 and 22 are substantially unbent. The cardan joint 22 is positioned substantially vertically below the axis of the joint 2C. There is a clearance h from the stop shoe 17 to its bearing on the carrier arm 2.

Fig. 6 shows the mower in a raised position, which is advantageous when making turns in the field, whereby the mower is raised to be passed over already cut crop. By means of a second latch 23 and an abutment 24 corresponding thereto, a releasable stop is provided for the upwards turning of the outermost part 2B of the carrier arm, and consequently, the position shown is determined, in which the transmission shaft 20 with its cardan joints 22, 23 is exposed to a so-called W-bent, which is advantageous, because no phase displacements are present in the power transmission. The position of the latch 23 shown in Fig. 6 may be regarded as an operating position which it takes up during normal operation, whereas for transport of the mower in the vertical transport position it is swung to the side.

## Claims

1. A lift-suspended agricultural implement, in particular a mower such as a disc or drum mower, comprising a carrier frame (1) adapted to be connected with the three-point suspension lift (10) of a tractor, a carrier arm (2) connected with the carrier frame, said carrier arm comprising a joint (2C), the axis of which, when the implement is in its working position, extends substantially in the travelling direction of the implement, and a power means (6) for moving the carrier frame (2) in the joint (2C), whereby the working part (3) of the implement is raised or lowered, **characterized** in that the joint (2C) comprises a releasable stop (7, 8; 23, 24) which in its active position limits the movement of the joint (2C) in one direction without impeding the movement of the joint (2C).

2. A lift-suspended implement according to claim 1, **characterized** in that the stop (7, 8) in its active position limits the movement of the joint (2C) in downwards direction and thus determines a normal working position.

3. A lift-suspended implement according to claims 1 or 2, **characterized** in that a stop (23, 24) limits the movement of the joint (2C) in upwards direction, thus determining a transport position for use when making turns in the field during operation.

4. A lift-suspended implement according to claims 1-3, in which the carrier arm (2) is connected with the working part (3) of the implement through a hinge, the axis of which is substantially parallel with the afore-mentioned axis (2C) and positioned substantially vertically above the centre of gravity of the working part (3), **characterized** in a spring (16) acting on the end of the working part positioned below the carrier arm in a direction towards the carrier arm (2) and a stop (17).

5. A lift-suspended implement according to claims 1-4, **characterized** in a supporting leg (14) with pre-adjustable length for use when parking the implement, when the implement is demounted from the tractor, and a parking stop for limiting the movement of the joint of the carrier frame (2C) in downwards direction to a position which, relative to the working position, is downwardly bent in order to determine a parking position for the joint (2C).

6. A lift-suspended implement according to claim 5, **characterized** in that the parking stop is a releasable stop.

7. A lift-suspended implement according to claims 1-6, **characterized** in that the releasable stop/stops is/are designed as swingable latches (7, 23) which may be swung between active and inactive positions.
